## Europäisches Patentamt

## European Patent Office

## Office européen des brevets

(11) Numéro de publication: **0 007 855**
**B1**

(12) **FASCICULE DE BREVET EUROPEEN**

(45) Date de publication du fascicule de brevet: **24.06.81**

(51) Int. Cl.³: **B 23 K 26/00**

(21) Numéro de dépôt: **79400499.4**

(22) Date de dépôt: **13.07.79**

(54) Appareil d'usinage à rayonnement laser.

(30) Priorité: **28.07.78 FR 7822349**

(43) Date de publication de la demande:
**06.02.80 Bulletin 80/3**

(45) Mention de la délivrance du brevet:
**24.06.81 Bulletin 81/25**

(84) Etats Contractants Désignés:
**BE CH DE FR GB LU**

(56) Documents cités:
**DE - A - 2 658 503**

**WELDING JOURNAL, vol. 50 n°.2 février 1971
MIAMI (US)
A.J. MOORHEAD: "Laser Welding and Drilling
Applications" pages 97—106**

(73) Titulaire: **LA SOUDURE AUTOGENE FRANCAISE
75, Quai d'Orsay
F-75321 Paris Cedex 07 (FR)**

(72) Inventeur: **Diane, Hervé
14, Maradas Verts
F-95000 Cergy (FR)**

(74) Mandataire: **Liboz, André et al,
L'AIR LIQUIDE SOCIETE ANONYME POUR
L'ETUDE ET L'EXPLOITATION DES PROCEDES
GEORGES CLAUDE 75, Quai d'Orsay
F-75321 Paris Cédex 7 (FR)**

Courier Press, Leamington Spa, England.

## Appareil d'usinage à rayonnement laser

La présente invention concerne essentiellement un appareil d'usinage, en particulier de soudage, par rayonnement laser, du type dans lequel un faisceau de lumière cohérente d'axe XX' est concentré, au moyen d'un système optique de focalisation, sur aire pratiquement ponctuelle d'une pièce à usiner, par exemple une pièce métallique, de façon à provoquer, au voisinage de ladite aire, la formation d'un bain de fusion, un flux de gaz inerte étant projeté sur ladite pièce à proximité dudit bain de fusion.

Les opérations d'usinage, en particulier de soudage, soumettent le système optique de focalisation, qui est un des éléments les plus fragiles et les directement exposés des appareils à faisceau laser, à des conditions de fonctionnement particulièrement sévères : émanations de fumées, projections de gouttelettes de métal liquide provenant du bain de fusion, etc... Le flux de gaz inerte a une double fonction : protéger le système optique contre les fumées et les projections et protéger le bain de fusion contre l'oxydation. L' expérience a montré que cette première fonction de protection est très insuffisante, du fait que le flux de gaz ne s'oppose que très imparfaitement aux remontées des particules de matière en fusion. Il en résulte que, dans les appareils à faisceau laser connus, le système optique est rapidement détérioré, sa durée moyenne d'utilisation ne dépassant pas 300 heures environ.

On connaît déjà, par le brevet DE—A 2.658.503, un dispositif d'usinage du type précité dans lequel le flux de gaz inerte rencontre un corps percé transparent au rayonnement laser, disposé entre la lentille et la pièce à usiner, qui le fait tourbillonner vers l'extérieur, ceci dans le but de dévier les vapeurs métalliques. Un tel corps percé constitue lui-même un élément optique, donc fragile, qui est situé au voisinage immédiat du bain de fusion, sans barrière interposée susceptible de le protéger efficacement contre les projections de gouttelettes métalliques. Il est à noter que le brevet n'envisage pas le problème posé par de telles projections.

L' article de Welding Journal (février 1971, pages 98—99) montre l'utilisation d'une fenêtre rotative transparente, de forme échancrée, logée dans un organe tubulaire, et interceptant le rayonnement, dans le but d'éliminer le problème des projections lors de l'obturation d'un trou dans une tubulure au moyen d'un faisceau laser. Cette fenêtre constitue elle-même un élément optique donc fragile, qui est exposé directement aux projections sans barrière protectrice intermédiaire.

Par ailleurs, dans les appareils connus, l'interruption du faisceau laser se fait, même pendant de courtes périodes, par obturation du faisceau en amont de la lentille. Or, le système optique absorbe une partie non négligeable de l'énergie de ce faisceau, il en résulte une augmentation de sa température et une déformation mécanique qui fait varier ses caractéristiques optiques. Des interruptions et rétablissements fréquents du faisceau entraînent un déséquilibre thermique du système optique, ce qui oblige à attendre un certain temps après chaque rétablissement du courant pour que le système optique ait retrouvé son équilibre thermique.

L'invention a pour but d'assurer une protection plus efficace de l'optique de focalisation que les appareils actuellement connus, en particulier contre les projections de matière en fusion, da façon à augmenter sa durée d'utilisation.

L'invention a également pour but de permettre l'interruption du faisceau laser tout en assurant l'equilibre thermique du système optique de focalisation.

Un autre but de l'invention est d'assurer une protection efficace de la pièce à usiner contre l'oxydation.

L'invention propose un appareil muni d'un ensemble de protection qui comporte un dispositif d'occultation disposé entre le système optique et la pièce à usiner et comprenant au moins une pale ou analogue solidaire d'un moyeu monté rotativement autour d'un axe YY' parallèle à l'axe XX' et décalé latéralement par rapport à ce dernier, de façon à intercepter partiellement et périodiquement le faisceau lumineux et dévier de leur trajectoire les gouttelettes de matière en fusion projetées à partir dudit bain en direction dudit système optique.

Un tel dispositif d'occultation rotatif constitue une véritable barrière qui empêche les gouttelettes d'atteindre le système optique tout en permettant la passage du rayonnement.

En choisissant expérimentalement les dimensions géométriques de la pale ainsi que sa vitesse de rotation, compte tenu du temps mis par les projections pour traverser l'espace qu'elles balayent on peut dévier toutes ces projections et par conséquent obtenir une protection efficace du système optique.

Selon une autre caractéristique de l'invention, l'ensemble de protection comporte en outre un dispositif d'obturation prévu pour intercepter totalement le faisceau lumineux en dehors des périodes d'utilisation de l'appareil.

Un tel dispositif d'obturation permet d'interrompre le faisceau lumineux sans interrompre l'alimentation de la source de rayonnement, donc sans provoquer un déséquilibre thermique du système optique.

Selon encore une autre caractéristique de l'invention, les dispositifs d'occultation et d'obturation précités sont montés sur un support coulissant disposé au-dessous du système optique précité et actionné par un vérin, ledit support étant prévu pour occuper deux positions pour lesquelles l'un ou l'autre des dispositifs se trouve sur la trajectoire du faisceau laser issu dudit système optique.

Ce mode de montage permet la mise en place facile de l'un ou l'autre dispositif selon l'utilisation de l'appareil.

Toujours selon l'invention, le dispositif d'occultation rotatif précité est logé dans une chambre prévue dans le support coulissant précité et parcourue par un gaz inerte.

Ce mode de réalisation permet de protéger le système optique contre les fumées au cours des opérations d'usinage tout en assurant également la protection de la pièce à usiner contre l'oxydation.

D'autres caractéristiques et avantages de l'invention apparaîtront au cours de la description qui va suivre.

Dans les dessins annexés donnés uniquement à titre d'exemple :

— la figure 1 est une coupe axiale et partielle d'un appareil selon l'invention destiné au soudage de pièces métalliques;

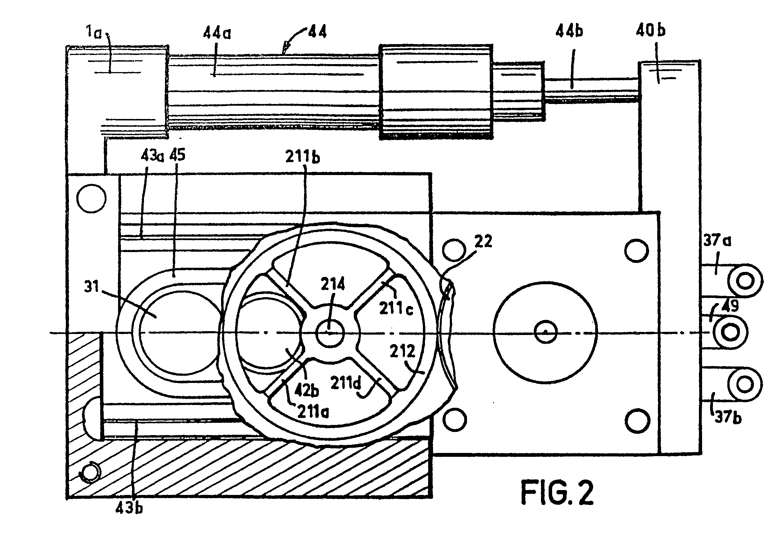

— la figure 2 est une coupe selon la ligne II/II de la figure 1;

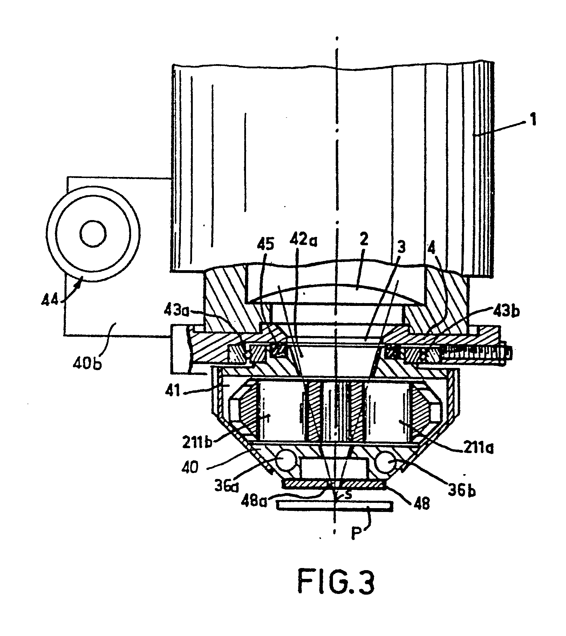

— la figure 3 est une coupe selon la ligne III/III de la figure 1.

Selon le mode de réalisation représenté, l'appareil de soudage conforme à l'invention comporte essentiellement un carter de forme générale cylindrique 1, à l'intérieur duquel sont logés une source (non représentée) connue en soi, émettant un rayonnement électromagnétique cohérent situé ou non dans le spectre visible, et un système optique de focalisation 2 d'axe XX' et constitué par exemple par une lentille de germanium monocristallin. Le système optique 2 reçoit le rayonnement émis par la source et le transforme en un faisceau conique de sommet S. Ce faisceau conique traverse un orifice 3 de la paroi 4 qui ferme l'extrémité inférieure du carter 1 et rencontre la pièce à usiner P, par exemple une pièce métallique, laquelle est située approximativement dans dans un plan passant par ledit sommet S. L'impact du rayonnement ainsi concentré par le système optique 2 sur une aire pratiquement ponctuelle de la pièce P provoque une élévation locale considérable de sa température et par conséquent la formation d'un bain de fusion au voisinage immédiat de la zone d'impact.

L'appareil de soudage selon l'invention est muni en outre, à sa partie inférieure, donc entre le carter 1 et la pièce P, d'un ensemble de protection désigné d'une façon générale par la référence 10 et destiné à protéger le système optique contre les projections de matière en fusion et contre les fumées. L'ensemble de protection 10 comporte essentiellement le dispositif d'occultation rotatif 20 et le dispositif d'obturation 30, ces deux dispositifs étant montés sur un support commun 40.

Le dispositif d'occultation 20 comporte un organe rotatif 21 en forme de roue et constitué par un moyeu central 210, quatre pales identiques 211a, 211b, 211c, 211d et par une jante périphérique 212. Le moyeu 210 est monté, par l'intermédiaire de roulements 213, sur un arbre 214 d'axe géométrique YY' parallèle à l'axe XX' du système optique 2 et décalé relativement à ce dernier.

Les quatre pales 211a, 211b, 211c, 211d, de forme sensiblement rectangulaire sont disposées dans des plans passant par l'axe de rotation YY' et espacées angulairement de 90° les unes par rapport aux autres. La roue 21 est entraînée en rotation autour de l'axe YY' par un galet de friction 22 en prise avec la jante 212 et entraîné lui-même par un moteur électrique 23.

Les dimensions des pales ainsi que la vitesse angulaire de rotation de la roue 21 sont déterminées expérimentalement en fonction de la vitesse linéaire des projections qui remontent en direction du système optique.

A titre indicatif, on a donné à chacune des quatre pales de la roue 21 les dimensions géométriques suivantes:

— longueur:  20 mm
— largeur:   15 mm
— épaisseur: 4/10 mm

et on l'a entraînée à une vitesse de rotation constante de 24.000 tours par minute.

L'expérience a montré que, dans ces conditions, les projections ayant une vitesse linéaire maximale de 25 mètres à la seconde sont déviées par choc avec les pales et empêchées d'atteindre le système optique de focalisation.

Comme on le voit sur le dessin, la roue 21 et le galet 22 sont logés dans une chambre 41 du support 40, cette chambre étant munie de deux orifices coaxiaux 42a et 42b pour le passage du faisceau conique issu du système optique de focalisation, l'espace entre ces deux orifices étant balayé par les pales de la roue 21.

Le disposition d'obturation 30 est constitué par une couche 31 striée faite d'une substance capable d'absorber le rayonnement émis par la source, par exemple un composé à base de noir de carbone. Cette substance est disposée sur une platine circulaire 32 munie d'une tige filetée 33 et fixée au moyen d'un écrou 34 au support 40. Le dispositif 30 est entouré d'une chambre annulaire 35 communiquant avec des canalisations 36a et 36b reliées à des tubulures 37a, 37b, pour l'amenée et l'évacuation d'un fluide de refroidissement, par exemple de l'eau et dont la fonction est d'absorber les calories résultant du rayonnement laser.

Le support 40 est monté sur la paroi de fond 4 du carter 1 par l'intermédiaire de deux glissières à rouleaux croisés 43a et 43b, et est entraîné en translation par un vérin 44 dont le corps 44a est monté sur un socle 1a fixé au carter 1 et dont la tige 44b est solidaire d'un bras 40b du support 40. Le vérin 44 est prévu pour déplacer le support d'une position extrême et pour laquelle la médiane verticale de chaque pale coïncide, au cours de son passage entre les deux orifices 42a et 42b, avec l'axe XX', l'autre pour laquelle l'axe ZZ' du système d'obturation coïncide avec l'axe XX'. Un joint d'étanchéité 45 sur le support 40 entoure l'orifice 42a ainsi que la platine 32 portant la substance absorbante 31. Le support 40 est muni d'un orifice 46 qui communique avec la chambre 41 et auquel est raccordée une tubulure 49 qui délivre un gaz inerte venant d'une source (non représentée), par exemple d'argon. Ce gaz est introduit dans la chambre 41 sous un débit qui peut être de cinq litres par minute par exemple, et il ne peut s'évacuer de ladite chambre que par l'orifice inférieur 42b, en créant un courant de haut en bas.

Le support 40 est muni sur sa face inférieure d'une encoche 47 dans laquelle débouche l'orifice 42b. Cette encoche 47 est fermée par une toile métallique 48 fixée sur la paroi inférieure du support 40 et munie d'un orifice 48a concentrique aux orifices 42a et 42b et prévu par le passage du faisceau laser. Ceci permet d'obtenir, au-dessous du support 40, une réserve de gaz inerte ayant traversé la chambre 41 et qui se diffuse au travers de la toile métallique en créant une atmosphère qui protège la pièce à usiner P contre les oxydations.

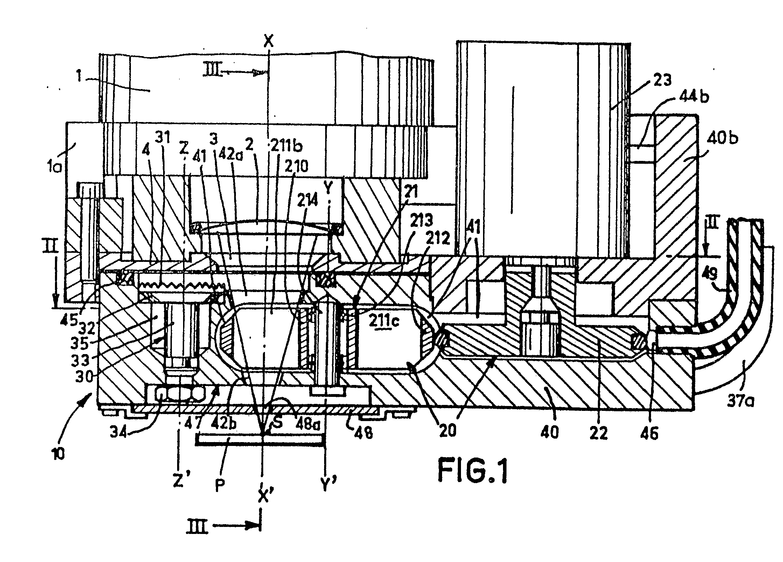

Lorsque l'appareil est en fonctionnement, le support 40 occupe la position représentée à la figure 1, la roue 21 est entraînée en rotation et le conduit 49 est alimenté en gaz inerte. Les gouttelettes de métal en fusion qui sont projetées vers le haut et ont traversé la toile métallique 48 sont déviées par les pales de la roue 21, tandis que les fumées sont empêchées de pénétrer, en raison de l'écoulement du gaz inerte, dans la chambre 41. Par ailleurs, le gaz inerte maintenu dans l'encoche 47 crée et diffuse à travers la toile métallique, au-dessus de la pièce à usiner, une "traînée" de protection.

En cas d'arrêt momentané de l'appareil de soudage, le support 40 occupe l'autre position, c'est-à-dire celle pour laquelle l'axe ZZ' coïncide avec l'axe XX'. Le rayonnement émis par la source, que continue à être alimentée, est absorbé par la substance 31.

Dans ces conditions, le système optique 2 est en équilibre de température et l'appareil est prêt pour une nouvelle opération de soudage, sans modification du réglage. L'alimentation de la source est bien entendu coupée pour un arrêt définitif de l'appareil.

On pourrait apporter de nombreuses variantes à l'exemple de réalisation décrit sans pour autant sortir du cadre de l'invention.

**Revendications**

1. Appareil d'usinage, en particulier de soudage, par rayonnement laser, du type dans lequel un faisceau de lumière cohérente d'axe XX' est concentré, au moyen d'un système optique de focalisation (2), sur une aire pratiquement ponctuelle d'une pièce à usiner (P), par exemple une pièce métallique, de façon à provoquer, au voisinage de ladite aire, la formation d'un bain de fusion, un flux de gaz inerte étant projeté sur ladite pièce à proximité dudit bain de fusion, caractérisé en ce qu'il est muni d'un ensemble de protection (10) qui comporte un dispositif d'occultation (20) disposé entre le système optique (2) et la pièce à usiner P et comprenant au moins une pale ou analogue (211a) solidaire d'un moyeu (214) monté rotativement autour d'un axe YY' parallèle à l'axe XX' et décalé latéralement par rapport à ce dernier, de façon à intercepter partiellement et périodiquement le faisceau lumineux et dévier de leur trajectoire les goutelettes de matière en fusion projetées à partir dudit bain en direction dudit système optique (2).

2. Appareil selon la revendication 1, caractérisé en ce que la pale précitée (211a) est constituée par une plaque de forme sensiblement rectangulaire disposée dans un plan passant par l'axe de rotation YY' dudit moyeu.

3. Appareil selon la revendication 1, caractérisé en ce que le dispositif d'occultation (20) précité comporte plusieurs pales radiales identiques (211a, 211b, 211c, 211d) angulairement équidistantes.

4. Appareil selon la revendication 3, caractérisé en ce que les pales précitées sont réunies par une jante périphérique circulaire (212) concentrique au moyeu (214).

5. Appareil selon la revendication 4, caractérisé en ce que le dispositif d'occultation (20) précité est entraîné en rotation autour de son axe YY' au moyen d'un galet d'entraînement (22) en contact de friction avec la jante (212) précitée et entraîné lui-même par un moteur (23), par exemple électrique.

6. Appareil selon la revendication 5, caractérisé en ce que le dispositif d'occultation (20) précité comporte quatre pales (211a, 211b, 211c, 211d) espacées angulairement à 90°.

7. Appareil selon la revendication 1, caractérisé en ce que l'ensemble de protection (10) précité comporte en outre un dispositif d'obturation (30) prévu pour intercepter totalement le faisceau lumineux précité en dehors des périodes d'utilisation dudit appareil d'usinage.

8. Appareil selon la revendication 7, caractérisé en ce que le dispositif d'obturation (30) précité comporte un élément (31) absorbant les rayons lumineux et est muni d'un circuit d'eau de refroidissement (35, 36a, 36b).

9. Appareil selon la revendication 1 et la revendication 9, caractérisé en ce que le dispositif d'occultation (20) et le dispositif d'obturation (30) précités sont montés sur un support coulissant (40) actionné par un vérin (44) et prévu pour occuper deux positions pour lesquelles l'un ou l'autre desdits dispositifs (20 ou 30) se trouve sur la trajectoire du faisceau laser issu du système optique 2.

10. Appareil selon la revendication 9, caractérisé en ce que le support coulissant (40) précité est muni intérieurement d'une chambre (41) dans laquelle est logé le dispositif d'occultation (20), ladite chambre étant fermée à l'exception de deux orifices coaxiaux (42a, 42b) prévus sur deux de ses parois opposées pour le passage du faisceau laser.

11. Appareil selon la revendication 10 caractérisé en ce que la chambre (41) précitée est munie de moyens (49) d'adduction d'un gaz, par exemple d'argon.

12. Appareil selon la revendication 11, caractérisé en ce que le support (40) précité est muni à sa partie inférieure d'une encoche (47) dans laquelle débouche l'un des orifices précités (42b) du support, ladite encoche étant fermée par une toile métallique (48) munie d'un orifice (48a) concentrique à l'orifice précité.


**Claims**

1. Machining apparatus, in particular for welding by laser beam of the type in which a beam of coherent light with an axis XX' is concentrated, by means of an optical focussing system (2) on a practically pinpoint area of an article P to be machined, for example a metal article, so as to cause, in the neighbourhood of the said area, the formation of a molten bath, a flux of inert gas being blown onto the said article in the proximity of the said molten bath, characterised in that it is provided with a protection unit (10) which comprises an occultation device (20) disposed between the optical system (2) and the article P to be machined and comprising at least one shut-off device (211a) or similar which is solid with a hub or boss (214) which is mounted to rotate around an axis YY' which is parallel to the XX' axis and offset laterally with respect to this latter, so as partially and periodically to intercept the beam of light and deflect from their path the small drops of molten matter projected from the said bath in the direction of the said optical system (2).

2. Apparatus according to claim 1, characterised in that the said shut-off device (211a) is constituted by a plate of substantially rectangular shape disposed in a plane passing through the axis of rotation YY' of the said hub.

3. Apparatus according to claim 1, characterised in that the said occultation device (20) comprises several angularly equidistant, identical radial shut-off devices (211a, 211b, 211c, 211d).

4. Apparatus according to claim 3, characterised in that the said shut-off devices are connected by a circular peripheral rim (212) concentric with the hub (214).

5. Apparatus according to claim 4, characterised in that the said occultation device (20) is driven in rotation about its axis YY' by means of a drive roller (22) in friction contact with the said rim (212) and which is itself driven by a motor (23), for example an electric motor.

6. Apparatus according to claim 5, characterised in that the said occultation device (20) comprises four shut-off devices (211a, 211b, 211c, 211d) angularly spaced at 90°.

7. Apparatus according to claim 1, characterised in that the said protection unit (10) further comprises an obturation device (30) intended totally to intercept the said light beam outside the periods of utilization of the said machining apparatus.

8. Apparatus according to claim 7, characterised in that the said obturation device (30) comprises an element (31) absorbing the light rays and is provided with a water cooling circuit (35, 36a, 36b).

9. Apparatus according to claim 1 and claim 9, characterised in that the said occultation device (20) and obturation device (30) are mounted on a sliding support (40) activated by a screw (44) and intended to occupy two positions for which either one or other of the said devices (20 or 30) is to be found in the path of the laser beam issuing from the optical system (2).

10. Apparatus according to claim 9, characterised in that the said sliding support (40) is provided within a chamber (41) in which is located the occultation device (20), the said chamber being closed except for two coaxial openings (42a, 42b) provided in its two opposite walls for passage of the laser beam.

11. Apparatus according to claim 10, characterised in that the said chamber (41) is provided with means (49) for admission of a gas, for example argon.

12. Apparatus according to claim 11, characterised in that the said support (40) is provided at its lower part with a recess or the like (47) into which opens one of the said openings (42b) of the support, the said recess being closed by a metal gauze (48) provided with an opening (48a) concentric with the above-mentioned opening.


**Patentansprüche**

1. Vorrichtung zur Bearbeitung, insbesondere zum Schweissen, mittels Laserstrahl, bei welcher ein Bündel kohärenten Lichtes mit der Achse XX' mittels eines optischen Fokussiersystems (2) praktisch punktförmig auf eine Fläche eines zu bearbeitenden Werkstückes P konzentriert wird, z. B. auf ein metallisches Werkstück, um in der Nachbarschaft dieser Fläche die Bildung eines Schmelzbades hervorzurufen, wobei eine Strömung inerten Gases auf dieses Werstück in der Nachbarschaft des Schmelzbades aufgeschleudert wird, dadurch gekennzeichnet, daß eine Schutzeinrichtung (10) vorgesehen ist, die eine Unterbrechungsvorrichtung (20) aufweist, welche zwischen dem optischen System (2) und dem zu bearbeitenden Werkstück P angeordnet ist und mindestens einen Flügel (211a) oder

dergleichen aufweist, der formschlüssig an einer Nabe (214) befestigt ist, die um eine zur Achse XX' parallele Achse YY' drehbar montiert und seitlich bezüglich der Achse XX' versetzt ist, derart, daß das Lichtbündel teilweise und periodisch unterbrochen wird und die schmelzflüssigen Materialtröpfchen, die von diesem Bad in Richtung auf das optische System (2) herausgeschleudert werden, aus ihrer Bahn abgelenkt werden.

2. Vorrichtung nach Anspruch 1, dadurch gekennzeichnet, daß der Flügel (211a) aus einer Platte im wesentlichen rechteckiger Form besteht, welche in einer Ebene angeordnet ist, die durch die Drehachse YY' der Nabe (214) hindurchgeht.

3. Vorrichtung nach Anspruch 1, dadurch gekennzeichnet, daß die Unterbrechungsvorrichtung (20) mehrere radiale identische, in gleichen Winkelabständen angeordnete Flügel (211a, 211b, 211c, 211d) aufweist.

4. Vorrichtung nach Anspruch 3, dadurch gekennzeichnet, daß die Flügel durch einen Radkranz (212) mit kreisrundem Umfang konzentrisch zur Nabe (214) verbunden sind.

5. Vorrichtung nach Anspruch 4, dadurch gekennzeichnet, daß die Unterbrechungsvorrichtung (20) um ihre Achse XX' mittels einer Transportrolle (22) in Reibberührung mit dem Radkranz (212) drehbar ist und daß die Rolle ihrerseits durch einen Motor (23), z. B. einen Elektromotor, angetrieben ist.

6. Vorrichtung nach Anspruch 5, dadurch gekennzeichnet, daß die Unterbrechungsvorrichtung (20) vier in einem Winkelabstand von 90° zueinander angeordnete Flügel (211a, 211b, 211c, 211d) aufweist.

7. Vorrichtung nach Anspruch 1, dadurch gekennzeichnet, daß die Schutzeinrichtung (10) ferner eine Verschließvorrichtung (30) aufweist, die zum vollständigen Unterbrechen des Lichtbündels außerhalb der Benutzungszeiten dieser Bearbeitungsvorrichtung vorgesehen ist.

8. Vorrichtung nach Anspruch 7, dadurch gekennzeichnet, daß die Verschließvorrichtung (30) ein die Lichtstrahlen absorbierendes Element (31) aufweist und mit einem Kühlwasserkreislauf (35, 36a, 36b) versehen ist.

9. Vorrichtung nach Anspruch 1 und 8, dadurch gekennzeichnet, daß die Unterbrechungsvorrichtung (20) und die Verschließvorrichtung (30) auf einem Gleitlager (40) montiert sind, welches durch eine Hebevorrichtung (44) betätigt wird und dafür vorgesehen ist, zwei Positionen einzunehmen, bei welchen die eine oder die andere dieser Vorrichtung (20 oder 30) sich auf der Bahn des von dem optischen System (2) ausgegebenen Laserbündels befindet.

10. Vorrichtung nach Anspruch 9, dadurch gekennzeichnet, daß das Gleitlager (40) innen mit einer Kammer (41) versehen ist, in welcher die Unterbrechungsvorrichtung (20) angeordnet ist, und daß die Kammer mit Ausnahme von zwei koaxialen Öffnungen (42a, 42b) verschlossen ist, die auf zwei ihrer gegenüberliegenden Wände für den Durchgang des Laserbündels vorgesehen sind.

11. Vorrichtung nach Anspruch 10, dadurch gekennzeichnet, daß die Kammer (41) mit Zuführmitteln (49) eines Gases, z. B. Argon, versehen ist.

12. Vorrichtung nach Anspruch 11, dadurch gekennzeichnet, daß das Lager (40) an seinem unteren Teil mit einer Kerbe (47) versehen ist, in die eine der Öffnungen (42d) des Lagers münden und welche durch ein metallisches Gewebe (48) verschlossen ist, das mit einer Öffnung (48a) versehen ist, die zu der vorgenannten Öffnung konzentrisch ist.

FIG.1

FIG.2

FIG.3